# EUROPEAN PATENT APPLICATION

(11) **EP 1 688 953 A2**
(43) Date of publication of application: **09.08.2006**
(21) Application number: 06101050.0
(22) Date of filing: 30.01.2006
(51) Int. Cl.: G11B 33/02

(54) **Optical disk drive**

(30) Priority: 06.02.2005 CN 200510007294
(71) Applicant: Ritek Corporation, Hsinchu Industrial Park Taiwan (TW)
(72) Inventor: Chen, Chun-Chieh, Sheng-An Li (TW); Lin, Yu-Chuan, Hsinchu Hsien (TW); Wu, Chien-Hua, Tou-Fen Chen (TW)
(74) Representative: Reichert, Werner Franz

(57) **Abstract**

An optical disk drive for reading the data of a compact disk is provided. The optical disk drive includes an optical pick-up module and a housing. In which, the optical pick-up module includes a damper and an optical pick-up. The damper is used for securing the compact disk. And the optical pick-up, disposed near the damper, is used for reading the data of the compact disk. The housing, including a primary case and a movable case, is connected to the optical pick-up module. The primary case is connected to the optical pick-up module and is suitable for holding a portion of the compact disk. The movable case, integrated to the primary case, is suitable for having relative motions with respect to the primary case, so as to make the compact disk to be mutually contained by both the movable case and primary case.

## Description

The present invention relates to a data reading device, more particularly, it relates to an optical disk drive.

A compact disk has gradually replaced the traditional magnetic storage medium and has become one of the data storage media which is indispensable in modem life. It has the advantages of being larger in storage capacity, easier for storage, capable of having longer storage life expectancy, lower in cost, not easily prone to damages of the data and so on. Although a compact disk has all the above advantages, as the personal computer follows the trend for miniaturization and has become thinner and lighter, the optical disk drive due to its over-sized housing has become one of the reasons which prevents the personal computer and the notebook computer as well from becoming significantly thinner and miniaturized.

In general, the optical disk drive used in a desktop computer mainly consists of an optical pick-up module and a housing, in which the optical pick-up module includes an engaging element, an optical pick-up, and a tray. The engaging element and the optical pick-up are disposed inside the housing, while the tray is a slipping feature connected to the housing. After the compact disk is put into the tray, the tray shall convey the compact disk into the housing by means of the relative motion with respect to the housing. Then, the compact disk is secured and rotated by the engaging element, and the data stored in the compact disk are read via the optical pick-up. However, the optical disk drive used in the desktop computer, due to its excessive size, cannot meet a notebook computer's requirements for thinness, weight, and size.

Therefore, a conventional optical disk drive proposes another structural design having another suitable size for use in a notebook computer. The engaging element, the optical pick-up, and the tray are directly integrated in an optical module in such a structural design. In addition, relative slippage is produced between the optical module and the housing. Therefore, after the compact disk is inserted into the optical module, the optical module is able to convey the compact disk into the housing via the relative slippage with respect to the housing, and reads the data of the compact disk. Though the aforementioned method is able to reduce the volume of the optical disk drive to make the optical disk drive used in a notebook computer to be smaller than that used in a desktop computer, the volume of the optical disk drive used in a notebook still occupies a large portion of the total volume of the notebook computer.

Accordingly, the present invention is directed to provide an optical disk drive, in which the volume is miniaturized via a movable housing mechanism.

The present invention provides an optical disk drive suitable for reading the data of a compact disk. The aforementioned optical disk drive includes an optical pick-up module and a housing. The optical pick-up module further includes a damper and an optical pick-up. The damper is used for engaging the compact disk, and the optical pick-up, disposed near the engaging element, is used for reading the data of the compact disk. The housing, including a primary case and a movable case, is connected to the optical pick-up module. The primary case is connected to the optical pick-up module, and is suitable for holding a portion of the compact disk. The movable case, integrated to the primary case, is suitable for providing relative motion with respect to the primary case so as to make the compact disk contained by both the movable case and the primary case.

According to the optical disk drive described in the embodiments of the present invention, the above-mentioned optical pick-up module includes, for example, a tray for holding a compact disk.

According to the optical disk drive described in the embodiments of the present invention, the above-mentioned movable case is, for example, a kit assembly.

According to the optical disk drive described in the embodiments of the present invention, the above-mentioned movable case includes, for example, a folding mechanism, and the folding mechanism can be, for instance, a plurality of folding plates.

According to the optical disk drive described in the embodiments of the present invention, the above-mentioned folding plates, for example, include a plurality of holding plates and a plurality of cover plates. The holding plates and the cover plates are suitable for forming a holding plane between the primary case and the holding plates by means of the relative motion between the plates which is big enough to hold a compact disk, while the cover plates are suitable for covering the holding plane.

According to the optical disk drive described in the embodiments of the present invention, the above-mentioned primary case, for example, has a first opening space; the movable case and the primary case is able to form, for example, a second opening space by performing relative motions with respect to each other, in which the first and second opening space is suitable for mutually containing the compact disk together.

According to the optical disk drive described in the embodiments of the present invention, the above-mentioned movable case includes, for example, a movable element, which is pivotally connected to the surface of the primary case.

According to the optical disk drive described in the embodiments of the present invention, the above-mentioned movable case includes, for example, a slipping feature disposed inside the primary case.

According to the optical disk drive described in the embodiments of the present invention, the above-mentioned movable case, for example, can be the combination of a movable element and a slipping feature.

According to the optical disk drive described in the embodiments of the present invention, the above-mentioned movable case includes, for example, an annular sliding cover, which further includes, for example, a plurality of the fan-shaped sliding covers that are interconnected.

According to the optical disk drive described in the embodiments of the present invention, the movable case, for example, includes a plurality of strip-shaped cases disposed inside the primary case, both ends are suitable for slipping or rotating out of the primary case simultaneously.

In the present invention, the volume of an optical disk drive is reduced because the housing is designed to having a primary case and a movable case. When the optical disk drive needs to read the data stored in the compact disk, the movable case is able to extend outwardly from the primary case, and the compact disk is made to be mutually contained by both the primary case and the movable case.

In order to the make the aforementioned and other objects, features and advantages of the present invention more apparent, embodiments accompanied with figures are described in detail below. It is to be understood that both the foregoing general description and the following detailed description are exemplary, and are intended to provide further explanation of the invention as claimed.

The accompanying drawings are included to provide a further understanding of the invention, and are incorporated in and constitute a part of this specification. The drawings illustrate embodiments of the invention and, together with the description, serve to explain the principles of the invention.

Fig. 1 depicts a perspective view of an optical disk drive according to a first embodiment of the present invention.

Fig. 2 depicts a perspective sectional view of a primary case along the direction I-I' according to the first embodiment of the present invention.

Figs. 3-5 depict a plurality of perspective views illustrating a transformation of the housing of the optical disk drive according to the first embodiment of the present invention.

Fig. 6 depicts a perspective view illustrating a transformation of the housing of an optical disk drive according to another embodiment of the present invention.

Figs. 7-9 depict a plurality of perspective views illustrating a transformation of the housing of an optical disk drive according to a second embodiment of the present invention.

Figs. 10 -11 depict a plurality of perspective views illustrating a transformation of the housing of an optical disk drive according to a third embodiment of the present invention.

Figs. 12-14 depict a plurality of perspective views illustrating a transformation of the housing of an optical disk drive according to a fourth embodiment of the present invention.

Figs. 15-17 depict a plurality of perspective views illustrating a transformation of the housing of an optical disk drive according to a fifth embodiment of the present invention.

Figs. 18-19 depict a plurality of perspective views illustrating another transformation of the housing of the optical disk drive according to the fifth embodiment of the present invention.

Figs. 20-22 depict a plurality of perspective views illustrating yet another transformation of the housing of the optical disk drive according to the fifth embodiment of the present invention.

Figs. 23-25 depict a pluarlity of perspective views illustrating a transformation of the housing of an optical disk drive according to a sixth embodiment of the present invention.

Figs. 26-28 depict a plurality of perspective views illustrating a transformation of the housing of an optical disk drive according to a seventh embodiment of the present invention.

Figs. 29-34 depict a plurality of perspective views illustrating a transformation of the housing of an optical disk drive according to an eighth embodiment of the present invention.

Figs. 35-40 depict a plurality of perspective views illustrating a transformation of the housing of an optical disk drive according to a ninth embodiment of the present invention.

### DESCRIPTION OF THE EMBODIMENTS

The present invention provides an optical disk drive. The main objective of the present invention is to divide the housing of the optical disk drive into two parts, namely a primary case and a movable case to reduce the volume of the optical disk drive. When the optical disk drive needs to read the data stored in the compact disk, the movable case is able to extend outward from the primary case, which the compact disk is made to be contained inside both the primary case and the movable case. And then the data is read at the optical pick-up module disposed at the primary case. The related implementations shall be understood in accordance with the following embodiments:

**First Embodiment**

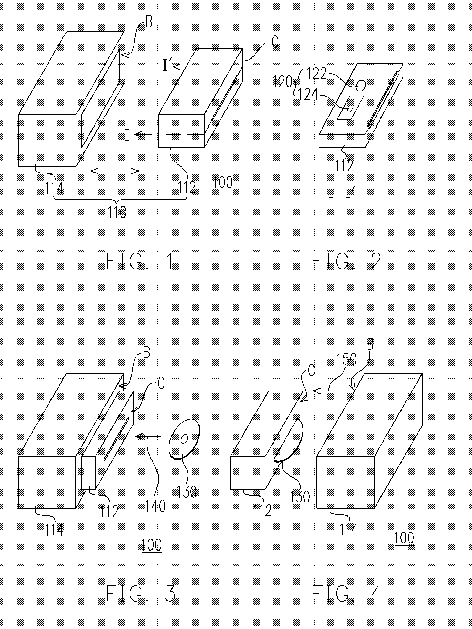

Fig. 1 depicts a perspective view of an optical disk drive according to a first embodiment of the present invention. Fig. 2 depicts a perspective sectional view of a primary case along the I-I' direction according to the first embodiment of the present invention. Referring to both Fig. 1 and Fig. 2, the optical disk drive 100 includes a housing 110 and an optical pick-up module 120. The housing 110 includes a primary case 112, and a movable case 114. And the optical pick-up module 120 includes a damper 122, and an optical pick-up 124. The optical pick-up module 120 is disposed inside the primary case 112, in which the damper 122 is used for engaging a compact disk, while the optical pick-up 124 is used for reading the data stored in the compact disk. The exterior design of the primary case 112 makes it impossible to contain a compact disk by itself. Moreover, the optical pick-up module 120, for example, can further include a tray (not shown) to hold a compact disk.

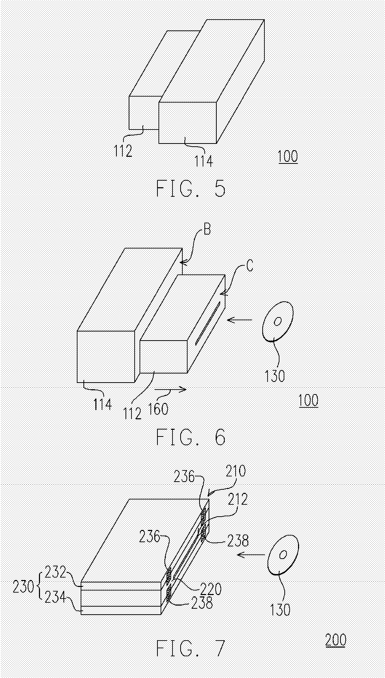

Figs. 3-5 depict a plurality of perspective views illustrating a transformation of the housing of the optical disk drive according to the first embodiment of the present invention. Referring to Fig. 1 and Figs. 3-5 together, in the first embodiment, the movable case 114 of the optical disk drive 100 is in the form of a kit assembly. The movable case 114 has a spacing for receiving a part of the primary case 112. When the optical disk drive 100 does not need to read the data stored in the compact disk 130, the optical disk drive 100 is able to make the surface B of the movable case 114 and the surface C of the primary case 112 to face the same direction, and to receive the primary case 112 inside the movable case 114, so as to be able to reduce the volume of the optical disk drive (as shown in Fig. 3). When the optical disk drive is intended to read the data stored in the compact disk 130, for example, the compact disk 130 is first inserted into the primary case 112 along the direction 140. The primary case 112 is separated from the movable case 114, and then the surface B of the movable case 114 and the surface C of the primary case 112 are disposed opposite to each other. And the movable case 114 is made to cover the primary case 112 along the direction 150, so as to make the compact disk 130 to be contained by both the primary case 112 and the movable case 114 (as shown in Fig. 4 and Fig. 5).

Fig. 6 depicts a perspective view illustrating a transformation of the housing of an optical disk drive according to another embodiment of the present invention. Referring to Fig. 3 and Fig. 6, the relative motion between the movable case 114 and the primary case 112 can also be, for example, relative slippage, in addition to the manners shown in the aforementioned embodiments. In other words, when the optical disk drive 100 intends to read the data of the compact disk 130, the primary case 112, for instance, can also slide out of the movable case 114 along the direction 160. And a spacing is formed inside the movable case 114 and the primary case 112 big enough to contain the compact disk 130. Then, the compact disk 130 is inserted into the optical disk drive 100 to read the data stored in the compact disk 130.

Based on the above descriptions, the main spirit of the aforementioned embodiment is to make the primary case to be pivotally joined with the movable case, so as to miniaturize the optical disk drive. When the optical disk drive is needed to read the data stored in the compact disk, the optical disk drive is able to make the compact disk contained by both the movable case and the primary case by means of the relative motion between the movable case and the primary case. The relative motion between the movable case and the primary case are not limited to the aforementioned two methods. Instead, any method of movement shall fall into the scope protected by the aforementioned embodiment as long as it is able to make the compact disk mutually contained by both the movable case and the primary case.

Based on the above-mentioned structure of the optical disk drive, the structure and the method of movement of the movable case are exemplified below.

**Second Embodiment**

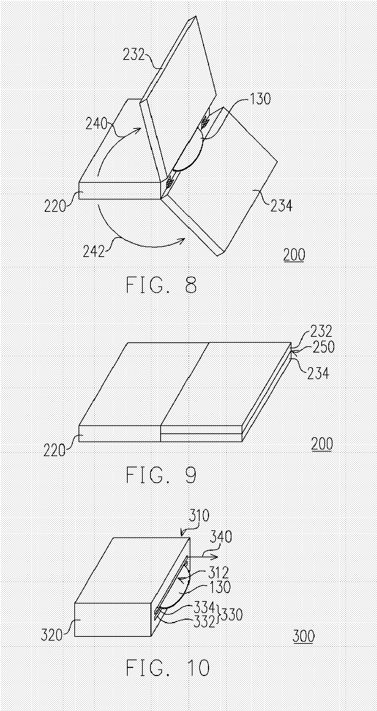

Figs. 7-9 depict a plurality of perspective views illustrating a transformation of the housing of an optical disk drive according to a second embodiment of the present invention. Referring to Figs. 7-9, the housing 210 of the optical disk drive 200 includes a primary case 220 and a movable case 230. The primary case 220 includes a spacing 212 to hold a portion of the compact disk 130, and the movable case 230 includes the movable elements 232 and 234. The movable elements 232 and 234 are pivotally connected to the primary case 220 respectively via pivot joints 236 and 238 (as shown in Fig. 7). When the optical disk drive 200 is intended to read the data stored in the compact disk 130, first of all, a portion of the compact disk 130 is inserted into the spacing 212. Later, the movable elements 232 and 234 are to rotate in the directions 240 and 242 with respect to the primary case 220 with the pivot joints 236 and 238 as the pivot support respectively (as shown in Fig. 8). And then, a spacing 250 shall be formed between the movable elements 232 and 234 to make the compact disk 130 to be mutually contained by both of the spacings 212 and 250.

Based on the above description, the main spirit of the aforementioned embodiment is to make one or more of the movable element(s) to be pivotally joined to the primary case via the pivot elements, so as to miniaturize the optical disk drive. When the optical disk drive is needed to read the data stored in the compact disk, the movable elements is able to make the compact disk mutually contained by both the movable element(s) and the primary case via the relative rotational motion between the pivot elements and the primary case. The relative motion between the movable element(s) and the primary case are not limited to the aforementioned methods. Instead, any method of movement shall fall within the scope defined by the aforementioned embodiment as long as it is able to make the compact disk to be mutually contained by both the spacing formed by the movable elements and the spacing occupied by the primary case.

**Third Embodiment**

Figs. 10-11 depict a plurality of perspective views illustrating a transformation of the housing of an optical disk drive according to a third embodiment of the present invention. Referring to Figs. 10-11, the housing 310 of the optical disk drive 300 includes a primary case 320 and a movable case 330. The primary case 320 has a spacing 312 to hold a portion of the compact disk 130. The movable case 330 includes the slipping features 332 and 334. The slipping features 332 and 334 are suitable for being contained inside the primary case 320. When the optical disk drive 300 is intended to read the data stored in the compact disk 130, a portion of the compact disk 130 is inserted into the spacing 312, and the slipping features 332 and 334 are made to slide out along the direction 340, in which the method for sliding is, for instance, to make the slipping features 332 and 334 to sprung out by using a spring (as shown in Fig. 10). Later, the compact disk 130 is to be contained in the spacing formed by both of the spacings 312 and 350 via the spacing 350 formed between the slipping features 332 and 334.

Based on the above descriptions, the main spirit of the aforementioned embodiment is to make one or more of the slipping feature(s) to be received in the primary case, so as to miniaturize the optical disk drive. When the optical disk drive is needed to read the data stored in the compact disk, the slipping feature(s) is able to make the compact disk to be mutually contained by both the slipping feature(s) and the primary case via the relative slippage between the slipping feature(s) and the primary case. The relative motion between the slipping feature(s) and the primary case are not limited to the aforementioned methods. Instead, any method of movement shall fall within the scope defined by the aforementioned embodiment as long as it is able to make the compact disk to be mutually contained by both the spacing formed by the slipping features and the spacing occupied by the primary case.

**Fourth Embodiment**

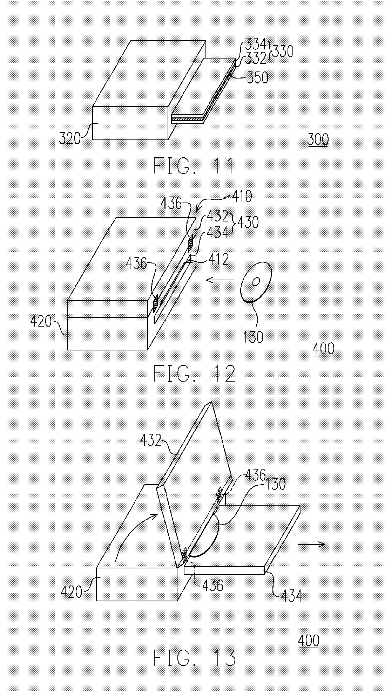

Figs. 12-14 depict a plurality of perspective views illustrating a transformation of the housing of an optical disk drive according to a fourth embodiment of the present invention. Referring to Figs. 12-14, the aforementioned embodiment is the combination of the second embodiment and the third embodiment. The housing 410 of the optical disk drive 400 includes a primary case 420 and a movable case 430. The primary case 420 includes a spacing 412 to hold a portion of the compact disk 130, and the movable case 430 includes a movable element 432 and a slipping feature 434. The movable element 432 is pivotally connected to the primary case 420 via the pivot joint 436. The optical disk drive 400 makes the compact disk 130 to be mutually contained by both the spacing 450 formed by the movable element 432 and the slipping feature 434 and the spacing 412 occupied by the primary case 420 via the relative rotation between the movable element 432 and the primary case 420 and the relative slippage between the slipping feature 434 and the primary case 420.

It is to be noted that although the aforementioned embodiment is to make the compact disk to be mutually contained by both the primary case and the movable case at one side, according to the spirit of the aforementioned embodiment, it is able to further set forth a design to make the compact disk to be mutually contained by both the primary case and the movable case at both sides.

**Fifth Embodiment**

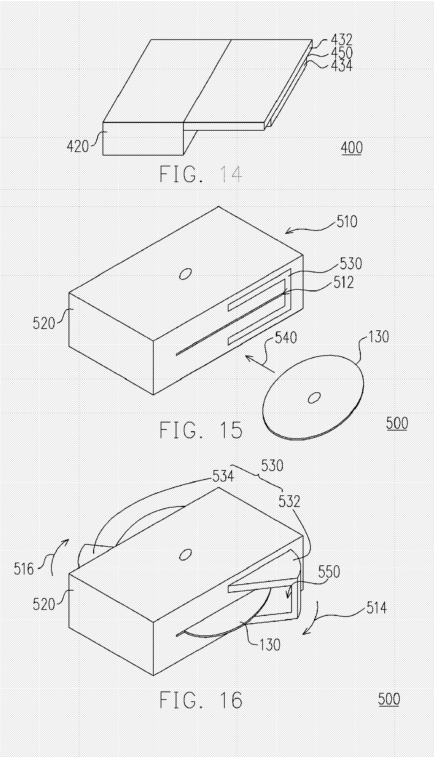

Figs. 15-17 depict a plurality of perspective views illustrating a transformation of the housing of an optical disk drive according to a fifth embodiment of the present invention. Referring to Figs. 15-17, the housing 510 of the optical disk drive 500 includes a primary case 520 and a movable case 530. The primary case 520 includes a spacing 512 to hold a portion of the compact disk 130. The movable case 530 includes a plurality of annular sliding covers 532 and 534, which are contained inside the primary case 520. When the optical disk drive 500 is intended to read the data stored in the compact disk 130, first of all, the compact disk 130 is inserted into the spacing 512 along the direction 540 and the compact disk 130 is made to go through the primary case 520. Then, the annular sliding covers 532 and 534 are made to slide respectively along the directions 514 and 516 so as to make the compact disk 130 to be gradually drawn into the spacing 550 surrounded by the annular sliding covers 532 and 534. At last, the compact disk 130 is completely mutually contained by both the spacing 550 formed by the annular sliding covers 532, 534 and the primary case 520.

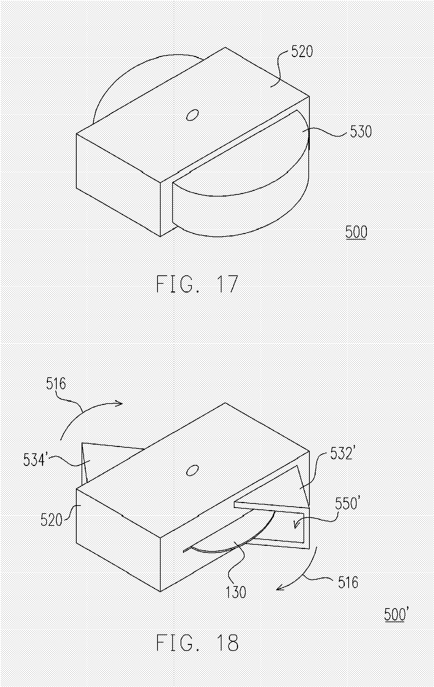

Figs. 18-19 depict a plurality of perspective views illustrating another tranformation of the housing of the optical disk drive according to the fifth embodiment of the present invention. Referring to Figs. 15, 18 and 19, in the optical disk drive 500', for example, the annular sliding covers in FIG. 6 is able to be replaced by a plurality of fan-shaped sliding covers 532' and 534'. And the compact disk is contained in the spacing 550' formed by the fan-shaped sliding covers 532' and 534' in the same method as mentioned above.

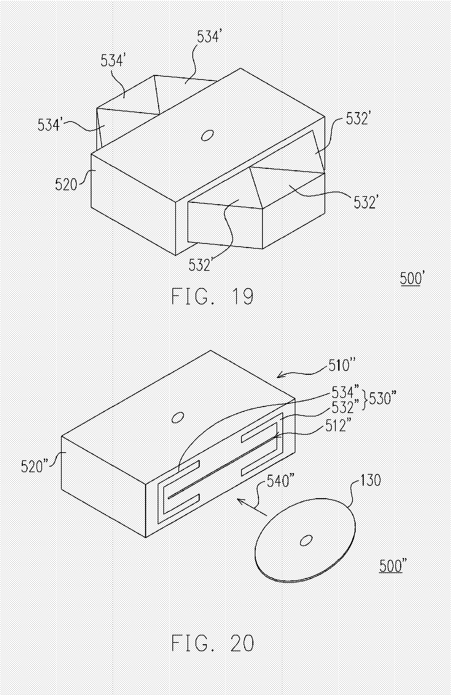

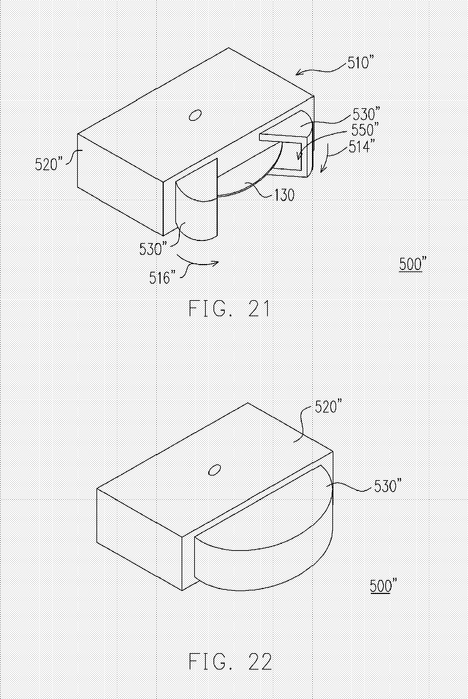

Figs. 20-22 depict a plurality of perspective views illustrating a transformation of the housing of an optical disk drive according to another embodiment of the present invention. Referring to Figs. 20-22, the housing 510" of the optical disk drive 500" includes a primary case 520" and a movable case 530". The primary case 520" includes a spacing 512" to hold a portion of the compact disk 130. The movable case 530" includes the annular sliding covers 532" and 534", which are received in the primary case 520". When the optical disk drive 500" is intended to read the data stored in the compact disk 130, the compact disk 130 is inserted into the spacing 512" along the direction 540", and the compact disk 130 is made to be contained by the primary case 520". It should be noted that the relative position between the compact disk 130 and the primary case 520" here can also be different from that in the aforementioned embodiment, for example, not through the primary case 510" (as shown in Fig. 20). Then, the annular sliding covers 532" and 534" are respectively slided along the directions 514" and 516" to make the compact disk 130 to gradually drawn into the spacing 550" formed by the annular sliding covers 532" and 534". At last, the compact disk 130 is completely mutually contained by both the spacing 550" formed by the annular sliding covers 532", 534" and the primary case 520" (as shown in Figs. 21 and 22).

Based on the above descriptions, the main spirit of the aforementioned embodiment is to make one or more of the annular sliding covers to be received in the primary case so as to reduce the volume of the optical disk drive. When the optical disk drive is needed to read the data stored in the compact disk, the annular sliding covers is able to make the compact disk to gradually drawn into the spacing formed by the annular sliding covers via the relative sliding between the annular sliding covers and the primary case, until the compact disk is completely mutually contained by both the spacing formed by the annular sliding covers and the primary case. The relative motion between the annular sliding covers and the primary case are not limited to the aforementioned methods. Instead, any method of movement shall fall within the scope defined by this embodiment as long as it is able to make the compact disk to be surrounded by both the annular sliding covers and the primary case.

**Sixth Embodiment**

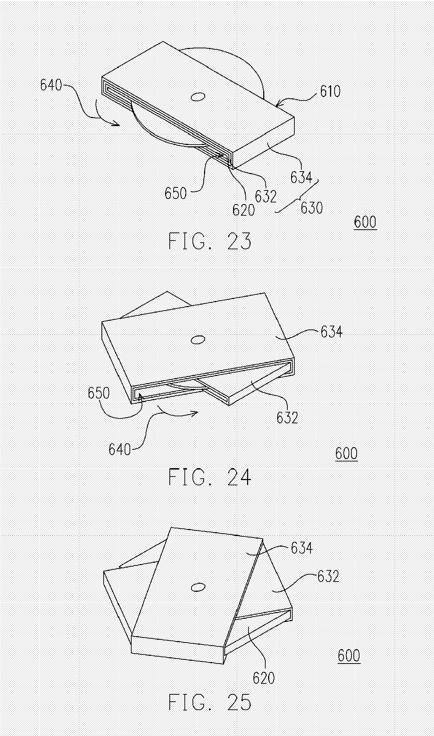

Figs. 23-25 depict a plurality of perspective views illustrating a transformation of the housing of an optical disk drive according to a sixth embodiment of the present invention. The housing 610 of the optical disk drive 600 includes a primary case 620 and a movable case 630. The movable case includes a plurality of strip-shaped cases 632 and 634, which are to be received outside the primary case 620. When the optical disk drive 600 is intended to read the data stored in the compact disk 130, the compact disk 130 is inserted into and through the primary case 620, and a portion of the compact disk 130 is made to be contained in the primary case 620. Later, the strip-shaped cases 632 and 634 are rotated, with respect to the primary case 620, along the direction 640, respectively, to make both ends of the strip-shaped cases 632 and 634 to rotate out of the primary case 620 simultaneously, which makes the compact disk 130 to be gradually drawn into the spacing 650 formed by the strip-shaped cases 632 and 634. At last, the compact disk 130 is completely mutually contained by the spacing 650 formed by the strip-shaped cases 632 and 634 and the primary case 620.

Based on the above descriptions, the main spirit of the aforementioned embodiment is to make one or more of the strip-shaped cases to be received in the primary case so as to reduce the volume of the optical disk drive. When the optical disk drive is needed to read the data stored in the compact disk, the strip-shaped cases are able to make the compact disk to be gradually drawn into the spacing formed by the strip-shaped cases via the relative rotation between the strip-shaped cases and the primary case, until the compact disk is completely mutually contained by both the spacing formed by the strip-shaped cases and the primary case. The relative rotation between the strip-shaped cases and the primary case are not limited to the aforementioned methods. Instead, any method of movement shall fall within the scope defined by the aforementioned embodiment as long as it is able to make the compact disk to be surrounded by both the strip-shaped cases and the primary case.

**Seventh Embodiment**

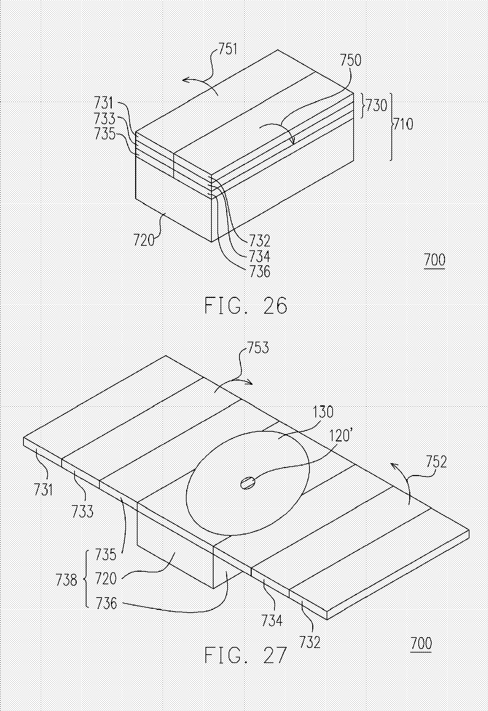

Figs. 26-28 depict a plurality of perspective views illustrating a transformation of the housing of an optical disk drive according to a seventh embodiment of the present invention. Referring to Figs. 26-28, the housing 710 of the optical disk drive 700 includes a primary case 720 and a movable case 730. The movable case 730 includes a plurality of folding plates, in which the folding plates, for example, further include the cover plates 731-734 and the holding plates 735, 736. The cover plate 732 is connected to the cover plate 734, which is connected to the holding plate 736. And the holding plate 736 is further connected to the primary case 720, in which the method for connection could be a pivotal connection. The cover plates 731, 733 and the holding plate 735 are interconnected in a similar method.

Still referring to Figs. 26-28, when the optical disk drive 700 does not need to read the data stored in the compact disk 130, the cover plates 731-734 and the holding plates 735, 736 are able, for example as shown in FIG. 26, to hide the cover plates 733, 734 and the holding plates 735, 736 beneath the cover plates 731, 732 via their interconnections, so as to reduce the volume of the optical disk drive 700. When the optical disk drive 700 is intended to read the data stored in the compact disk 130, the cover plates 731-734 and the holding plates 735, 736 is able to extend along the directions 750, 751 respectively, so that a holding platform 738 is formed by the holding plates 735, 736 and the primary case 720 together to hold the compact disk 130 and a spacing big enough to contain the compact disk 130 is formed by making the cover plates 731-734 to cover the holding platform 738.

**Eighth Embodiment**

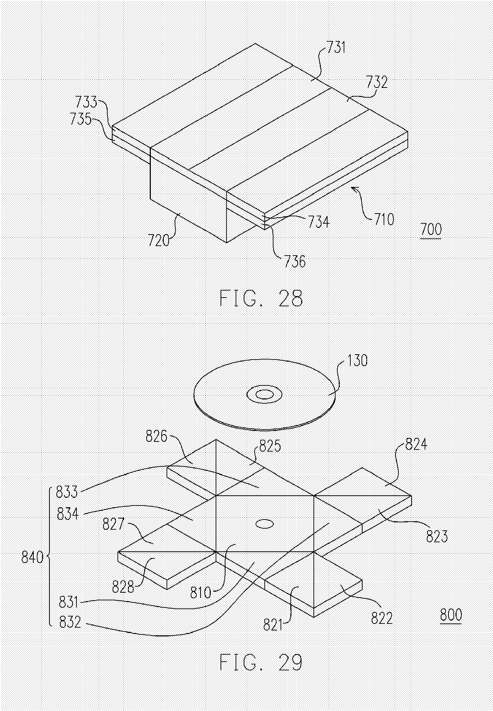

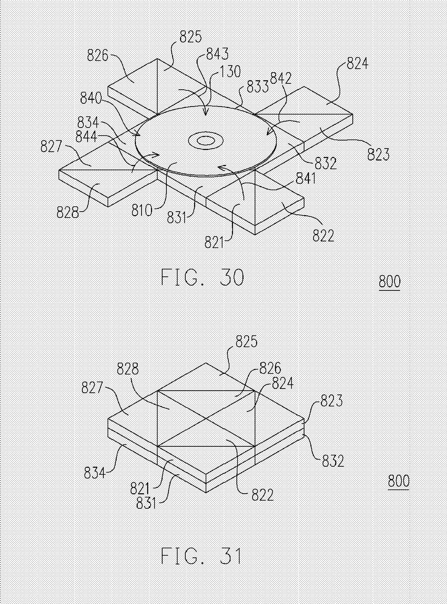

Figs. 29-34 depict a plurality of perspective views illustrating a transformation of the housing of an optical disk drive according to an eighth embodiment of the present invention. The cover plates and the holding plates in the eighth embodiment can be arranged according to the eighth embodiment. Referring to Figs. 29-34, the optical disk drive 800 includes a primary case 810, the cover plates 821-828, and the holding plates 831-834. The primary case 810 and the holding plates 831-834 form a holding platform 840 together to hold the compact disk 130. When the optical disk drive 800 is needed to read the data of the compact disk 130, the compact disk 130 can be disposed on the holding platform 840, and then the cover plates 821-828 can be disposed over the holding platform 840 along the directions 841-844 respectively, so as to make the compact disk wrapped by the primary case 810, the cover plates 821-828, and the holding plates 831-834 together.

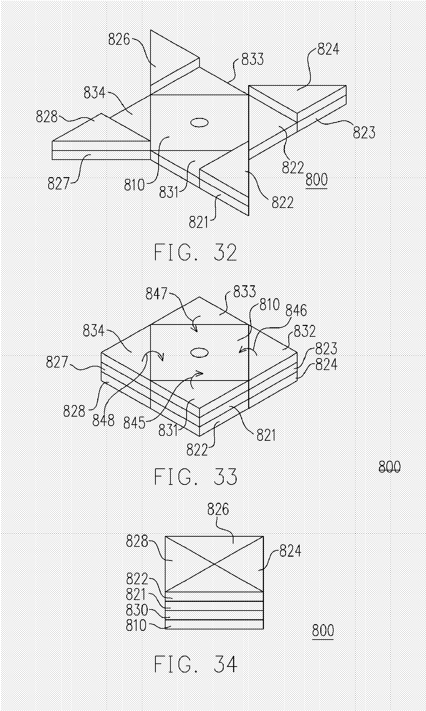

Referring to Fig. 29 and Figs. 32-34, when the optical disk drive 800 does not need to read the data, the cover plates 822, 824, 826 and 828, for example, are able to be folded onto the cover plates 821, 823, 825 and 827, respectively (as shown in FIG. 32). Then, the cover plates 821 and 822, 823 and 824, 825 and 826, 827 and 828 are folded as pairs respectively beneath the holding plates 831-834 (as shown in FIG. 33). Next, the cover plates 821-828 and the holding plates 831-834 are folded onto the primary case 810 along the directions 845-848 respectively, so as to reduce the volume of the optical disk drive 800 (as shown in FIG. 34).

**Ninth Embodiment**

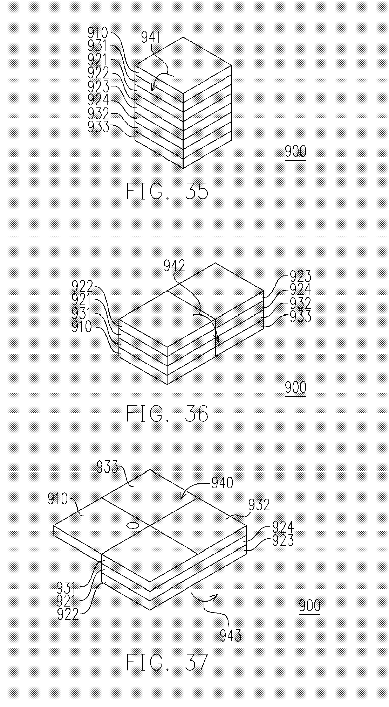

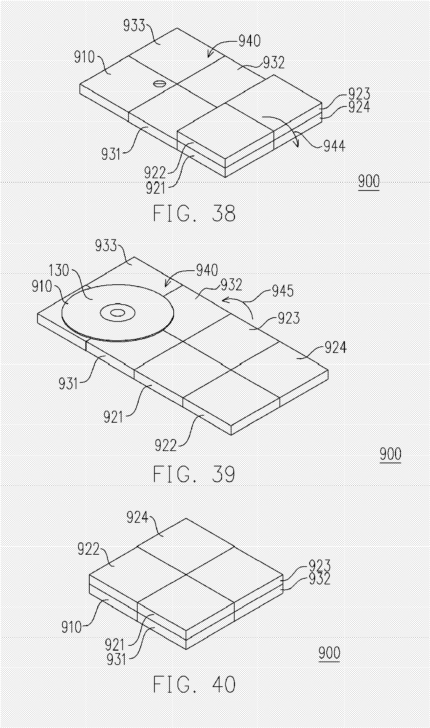

Figs. 35-40 depict a plurality of perspective views illustrating a transformation of the housing of an optical disk drive according to a ninth embodiment of the present invention. The cover plates and the holding plates in the ninth embodiment can be arranged according to the ninth embodiment. Referring to Figs. 35-40, the optical disk drive 900 includes a primary case 910, the cover plates 921-924 and the holding plates 931-933. When the optical disk drive 900 does not need to read the data of the compact disk 130, the optical disk drive 900 can be miniaturized, for instance, as shown in Fig. 35. When the optical disk drive 900 is needed to read the data of the compact disk 130, the primary case 910, the cover plates 921, 922 and the holding plate 931 are turned over along the direction 941 (as shown in Fig. 36). Then, the cover plates 921-924 and the holding plates 931, 932 are turned over along the direction 942 to form a holding plane 940 by the primary case 910 and the holding plates 931-933 together (as shown in Fig. 37). Next, the cover plates 921-924 are turned over along the direction 943 (as shown in Fig 38). Then, the cover plates 922, 923 are turned over along the direction 944 to make the primary case 910, the cover plates 921-924, and the holding plates 931-933 to be fully extended (as shown in Fig. 39). After that, the compact disk 130 is disposed on the holding plane 940, and the cover plates 921 to 924 are turned over along the direction 945 so as to make the compact disk 130 to be wrapped by the primary case 910, the cover plates 921-924, and the holding plates 931-933 together (as shown in Fig. 40).

Based on the above descriptions, the main spirit of the ninth embodiment is to interfold a plurality of folding plates to miniaturize the optical disk drive. When the optical disk drive is needed to read the data stored in the compact disk, the folding plates can make the compact disk to be mutually contained by both the folding plates and the primary case via the relative motion between the folding plates and the primary case. The relative motion between the folding plates and the primary case are not limited to the aforementioned methods. Instead, any method of movement shall fall within the scope defined by the ninth embodiment as long as it can make the compact disk to be mutually contained by both the folding plates and the primary case.

In summary, the optical disk drive of the present invention divides the housing into two parts, namely a primary case and a movable case. When the optical disk drive does not need to read the data stored in the compact disk, the movable case is able to reduce the volume of the optical disk drive via its mechanical design. When the optical disk drive is needed to read the data stored in the compact disk, the movable case is able to independently extend out from the primary case to form a spacing big enough to make the compact disk to be contained by both the primary case and the movable case. Furthermore, the mechanical designs of the movable case mentioned in the above embodiments are not intended to limit the designs of the movable case. According to the spirits of the above embodiments, a combination of the mechanical designs in the above embodiments can be adopted and a part or the whole of the primary case or the movable case can be integrated to another body herein.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An optical disk drive for reading the data of a compact disk, comprising:
an optical pick-up module, wherein comprising:
a damper used for securing the compact disk;
an optical pick-up, disposed near the engaging element, used for reading the data of the compact disk;
a housing connected to the optical pick-up module, wherein comprising:
a primary case connected to the optical pick-up module, suitable for holding a portion of the compact disk; and
a movable case integrated to the primary case, suitable for having relative motion with respect to the primary case for making the compact disk to be mutually contained by both the movable case and the primary case.

2. The optical disk drive according to Claim 1, wherein the optical pick-up module further includes a tray for holding the compact disk.

3. The optical disk drive according to Claim 1, wherein the movable case includes a kit assembly.

4. The optical disk drive according to Claim 1, wherein the movable case includes a folding mechanism.

5. The optical disk drive according to Claim 4, wherein the folding mechanism includes a plurality of folding plates.

6. The optical disk drive according to Claim 5, wherein the folding plates include a plurality of holding plates and a plurality of cover plates, wherein the holding plates and the cover plates are suitable for forming a holding platform big enough to contain the compact disk by the primary case and the holding plates via the relative motion between the plates, and the cover plates are suitable for covering the holding platform.

7. The optical disk drive according to Claim 1, wherein the primary case has a first open spacing and a second open spacing to be formed after the movable case and the primary case having relative motions with respect to each other, wherein the first open space and the second open space are suitable for mutually containing the compact disk together.

8. The optical disk drive according to Claim 7, wherein the movable case includes a movable element pivotally connected to the surface of the primary case.

9. The optical disk drive according to Claim 7, wherein the movable case includes a slipping feature disposed inside the primary case.

10. The optical disk drive according to Claim 7, wherein the movable case includes a combination of a movable element and a slipping feature.

11. The optical disk drive according to Claim 7, wherein the movable case includes an annular sliding cover.

12. The optical disk drive according to Claim 11, wherein the annular sliding cover includes a plurality of fan-shaped sliding covers that are interconnected.

13. The optical disk drive according to Claim 7, wherein the movable case includes a plurality of strip-shaped cases disposed inside the primary case, both ends of which are suitable for slipping out of the primary case simultaneously.

14. The optical disk drive according to Claim 7, wherein the movable case includes a plurality of strip-shaped cases disposed inside the primary case, both ends of which are suitable for being rotated out of the primary case simultaneously.
